# EUROPÄISCHE PATENTSCHRIFT

(11) **EP 1 672 787 B1**
(45) Veröffentlichungstag und Bekanntmachung des Hinweises auf die Patenterteilung: **27.08.2008**
(21) Anmeldenummer: 05110294.5
(22) Anmeldetag: 03.11.2005
(51) Int. Cl.: H03H 2/00

(54) **RUNDFUNKEMPFÄNGER**
Radio receiver
Récepteur radio

(30) Priorität: 15.12.2004 DE 102004060676
(43) Veröffentlichungstag der Anmeldung: 21.06.2006
(73) Patentinhaber: Continental Automotive GmbH, 30165 Hannover (DE)
(72) Erfinder: Van den Elzen, Jan, 5421ZG, Gemert (NL)

(56) Entgegenhaltungen:
- DE-A1- 2 030 875
- FR-A- 1 600 342
- US-A- 3 852 670
- US-A- 3 913 038
- US-A- 4 672 337
- US-A- 5 351 018

## Beschreibung

Die Erfindung betrifft einen Kraftfahrzeug-Rundfunkempfänger mit einem Radiotuner und einer mit einem RF-Eingang des Radiotuners verbundenen Antennenbuchse zum Anschließen einer Antenne.

Rundfunkempfänger, die in Kraftfahrzeugen eingesetzt werden, müssen unter schwierigsten Bedingungen empfangene Rundfunkprogramme wiedergeben. Die Empfangsbedingungen variieren während der Fahrt innerhalb kürzester Distanzen häufig sehr stark. Insbesondere müssen häufig sehr schwache Eingangssignale verarbeitet werden. Darüber hinaus ist der Einbauraum in Kraftfahrzeugen begrenzt, so dass ein kompakter Aufbau gefordert wird. Zudem befinden sich häufig im Fahrzeug selbst weitere Störquellen, die den Rundfunkempfang erschweren.

Gerade bei nur sehr schwachen Antennensignalen können elektromagnetische Störungen sich sehr negativ bemerkbar machen. Diese Störungen des Antennensignals entstehen häufig zwischen der Antennenbuchse und dem RF-Eingang des Radiotuners. Um solche Signalstörungen zu vermeiden oder zumindest zu verkleinern werden daher die Antennenbuchse und der RF-Eingang des Radiotuners in geringem Abstand zueinander angeordnet. Nachteilig hierbei ist jedoch, dass dann die zumeist vorgegebene Position der Antennenbuchse auch die Position des Radiotuners im Rundfunkempfänger weitgehend festlegt.

Derartige Störungen entstehen als Gleichtaktstörsignale (Common-Mode Interferences) zwischen der Antennenbuchse und dem RF-Eingang des Radiotuners, beispielsweise durch digitale Störungen von anderen Schaltkreisen, die sich in der Nähe des Radiotuners und der Antennenbuchse befinden. Grundsätzliche ist es möglich, diese Störemissionen durch eine Vergrößerung des Abstandes der störenden Bauteile oder Komponenten von dem Radiotuner bzw. der Antennenbuchse zu reduzieren, wodurch jedoch zusätzliche Randbedingungen bei der Gestaltung eines Rundfunkempfängers berücksichtigt werden müssen. Des Weiteren kann versucht werden, die Emissionen selbst zu beschränken. Dies ist jedoch teilweise mit hohem Aufwand verbunden bzw. nicht vollständig möglich.

Aus der US 4,672,337 ist ein kombiniertes Common-Mode/Differential-Mode-Filter zum Einsatz in VLF-Funkempfängern bekannt, das in einer Signalleitung zwischen dem Empfänger und einer Antenne angeordnet ist. Das Filter ist für den Einsatz in VLF-Funkempfängern eines U-Bootes vorgesehen und aufgrund seines Aufbaus für den Einsatz in einem Kraftfahrzeug-Rundfunkempfänger nicht geeignet.

Aus der US 5,351,018 und der US 3,852,670 sind verschiedene Filteranordnungen für Fernsehempfänger bekannt.

Aufgabe der Erfindung ist es daher, einen Kraftfahrzeug-Rundfunkempfänger anzugeben, bei dem die Störungen des Antennensignals vermindert sind. Die Aufgabe wird erfindungsgemäß durch einen Rundfunkempfänger mit den Merkmalen des Anspruchs 1 gelöst.
Vorteilhafte Ausgestaltungen sind in den Unteransprüchen angegeben.

Von dem Erfinder wurde erkannt, dass durch Einfügen eines Common-Mode Eingangsfilters Störsignale, die den Rundfunkempfang beeinträchtigen, reduziert werden können. Durch ein Common-Mode Eingangsfilter werden Gleichtaktstörsignale weitgehend unterdrückt, während das Antennensignal nicht beeinträchtigt wird. Common-Mode Filter sind als solche zwar weitgehend bekannt, wurden bisher aber für andere Einsatzzwecke, wie beispielsweise am Ausgang von Schaltnetzteilen, eingesetzt.

Durch den erfindungsgemäßen Einsatz eines Common-Mode Eingangsfilters wird eine größere Freiheit hinsichtlich der relativen Platzierung der Antennenbuchse und des Radiotuners erreicht. Das Common-Mode Eingangsfilter kann hierzu direkt auf einer Platine des Radiotuners angeordnet sein. Es kann daher bei der Bestückung einer solchen Platine mit aufgebracht werden, so dass nur ein geringer zusätzlicher Aufwand entsteht.

Alternativ kann das Common-Mode Eingangsfilter in eine Verbindungsleitung zwischen der Antennenbuchse und dem RF-Eingang des Radiotuners eingebracht sein. Vorzugsweise ist das Common-Mode Filter dann an dem Ende des Verbindungskabels angebracht, das dem Radiotuner zugewandt ist.

Vorzugsweise ist das Common-Mode Filter unmittelbar am RF-Eingang des Radiotuners angebracht. Störungen, die auf der Verbindungsleitung zwischen der Antennenbuchse und dem Radiotuner entstehen, werden auf diese Weise wirksam eliminiert.

Es hat sich gezeigt, dass für den vorgesehenen Zweck Common-Mode Filter mit einer (Common-Mode) Impedanz von mehr als 100 Ω bei einer Frequenz von 100 MHz besonders vorteilhaft eingesetzt werden können.

Die Erfindung wird nachfolgend anhand eines Ausführungsbeispiels und der Zeichnung näher erläutert. Es zeigen:
- Figur 1: einen Radiotuner mit einem Common-Mode Filter,
- Figur 2: eine Prinzipdarstellung zur Erklärung der Wirkungsweise des Common-Mode Filters,
- Figur 3: einen Rundfunkempfänger.

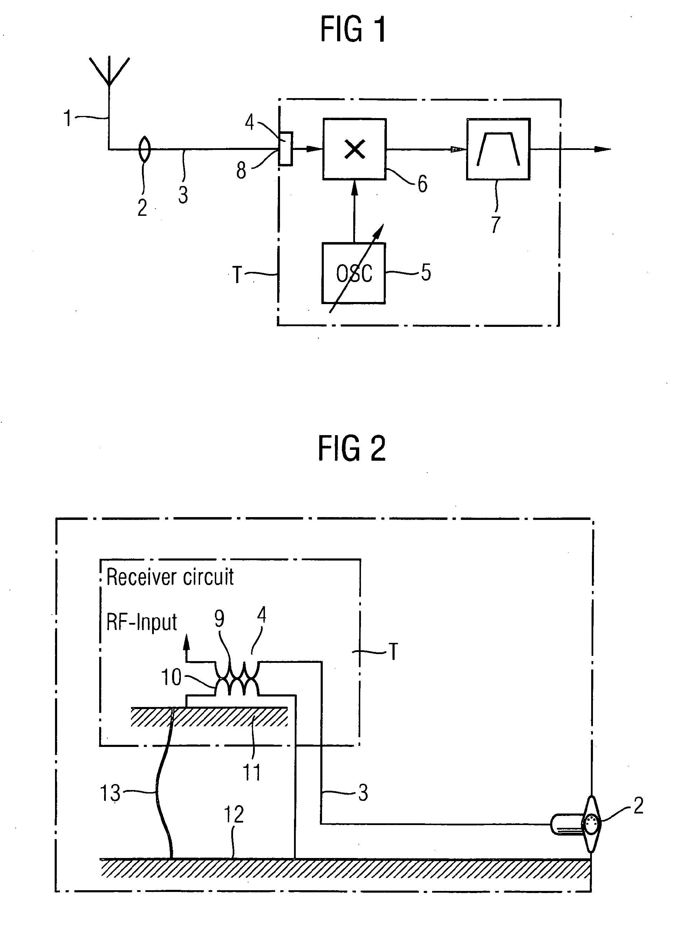

Figur 1 zeigt eine Antenne 1, die über eine Antennenbuchse 2 und eine Verbindungsleitung 3 mit einem Radiotuner T verbunden ist. Der Radiotuner T weist in bekannter Weise einen Oszillator 5, einen Mischer 6 und ein Bandpassfilter 7 auf. Die gewünschte Eingangsfrequenz wird hierbei durch Mischen mit der Frequenz des einstellbaren Oszillators 5 im Mischer 6 auf eine niedrigere Frequenz, die so genannte Zwischenfrequenz, heruntergesetzt. Die Funktionsweise eines entsprechenden Radiotuners ist hinreichend bekannt und muss nicht im Detail beschrieben werden. Erfindungsgemäß weist der Radiotuner T ein Common-Mode Filter 4 auf. Das Common-Mode Filter 4 ist hierbei direkt auf einer Platine des Radiotuners T unmittelbar am RF-Eingang 8 des Tuners T angebracht. Durch das Common-Mode Filter 4 werden Gleichtaktstörsignale, die auf der Verbindungsleitung 3 zwischen der Antennenbuchse 2 und dem RF-Eingang 8 durch Einstrahlung entstehen, weitgehend eliminiert. Hierdurch ist es nicht mehr erforderlich, den Tuner T in möglichst geringem Abstand von der Eingangsbuchse 2 anzuordnen, um entsprechende Störungen zu vermeiden.

Figur 2 zeigt eine weitere schematische Darstellung, anhand derer die Wirkungsweise des Common-Mode Filters erläutert wird. Das Common-Mode Filter ist als Spule, beispielsweise als Ringkernspule, mit zwei Wicklungen 9, 10 ausgebildet. Die Wicklung 9 ist mit ihrem einen Ende direkt über die Leitung 3 mit der Antennenbuchse 2 verbunden, wobei die Leitung 3 das Antennensignal führt. Mit ihrem anderen Ende ist die Wicklung 9 mit dem Eingang des Radiotuners T verbunden. Die zweite Wicklung 10 des Common-Mode Filters ist einerseits mit der Masse 11 des Radiotunerschaltkreises und andererseits mit der Masse 12 der Antennenbuchse 2 verbunden.

Die Masse 11 des Tuners T und die Masse 12 der Antennenbuchse 2 sind über die Masseverbindung 13 miteinander verbunden. Diese Masseverbindung 13 wird zwar niederohmig ausgelegt, weist jedoch in der Praxis einen Gleichstromwiderstand und eine parasitäre Induktivität auf. Hierdurch baut sich eine Gleichtaktspannung zwischen der Masse 11 des Tuners T und der Masse 12 der Antennenbuchse 2 auf. Das Common-Mode Filter verhindert, dass diese Störungen die Tunerschaltung erreichen. Das Antennensignal (Differential-Mode Signal) wird dagegen praktisch nicht beeinträchtigt.

In einem Ausführungsbeispiel wurde mit einem Common-Mode Filter, das eine Common-Mode Impedanz von 370 Ω bei 100 MHz und eine Differential-Mode Impedanz von 6 Ω bei 100 MHz aufweist, eine Unterdrückung von auftretenden Gleichtaktstörsignalen von 20 dB erreicht.

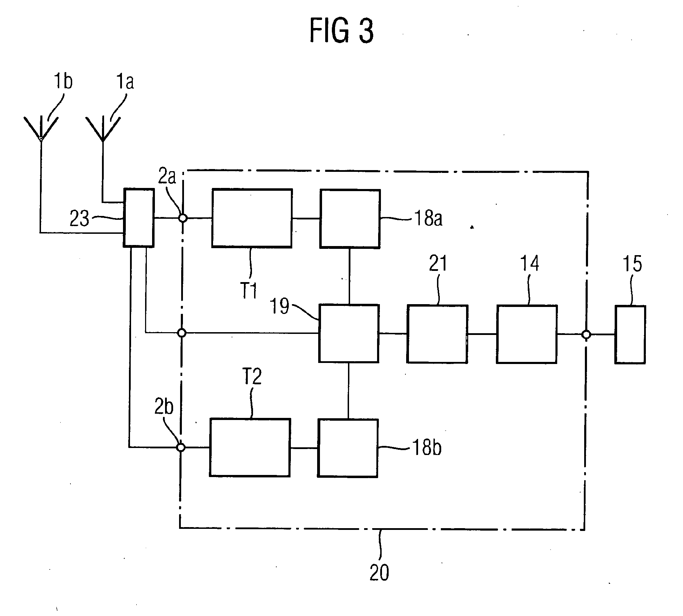

Der beschriebene Radiotuner T kann beispielsweise in einem Zweituner-Rundfunkempfänger eingesetzt werden, wie er in Figur 3 dargestellt ist. Der Rundfunkempfänger 20 weist Antennenbuchsen 2a, 2b auf. Die Antennenbuchsen 2a, 2b sind mit einem externen Antennenumschalter 23 verbunden, an den Antennen 1a, 1b angeschlossen sind. Der Antennenumschalter 23 und die zweite Antenne 2b werden für die Durchführung eines sogenannten Antennen-Diversity benötigt. Sie sind für die vorliegende Erfindung jedoch ohne Bedeutung.

Die an den Antennenbuchsen 2a, 2b anliegenden Antennensignale werden einem ersten bzw. zweiten Radiotuner T1, T2 zugeleitet, deren Ausgangssignale nach Digitalisierung in den A/D-Wandlern 18 einem DSP 19 zugeführt werden. Das Ausgangssignal des DSP 19 wird einer Signalverarbeitungseinrichtung 21 zugeführt. In der Signalverarbeitungseinrichtung 21 wird in bekannter Weise aus dem Zwischenfrequenzsignal ein akustisches Signal gewonnen, das über einen oder mehrere Verstärker 14 einem oder mehreren Lautsprechern 15 zugeführt wird.

## Patentansprüche

1. Kraftfahrzeug-Rundfunkempfänger (20) mit einem Radiotuner (T) und einer mit einem RF-Eingang (8) des Radiotuners (T) verbundenen Antennenbuchse (2) zum Anschließen einer Antenne (1), wobei eine Masse (11) des Tuners (T) und eine Masse (12) einer Antennenbuchse (2) über eine Masseverbindung (13) miteinander verbunden sind, **dadurch gekennzeichnet, dass** der Rundfunkempfänger ein Common-Mode Eingangsfilter (4) zur Unterdrückung von Gleichtaktstörsignalen am RF-Eingang (8) aufweist, das als Spule mit einer ersten Wicklung (9) und einer zweiten Wicklung (10) ausgebildet ist, wobei ein erstes Ende der ersten Wicklung (9) mit der Antennenbuchse (2) und ein zweites Ende der ersten Wicklung (9) mit dem Radiotuner (6) und die zweite Wicklung (10) einerseits mit der Masse (11) des Tuners (T) und andererseits mit der Masse (12) der Antennenbuchse (2) verbunden ist.

2. Kraftfahrzeug-Rundfunkempfänger (20) nach Anspruch 1 einem der vorhergehenden Ansprüche, **dadurch gekennzeichnet, dass** das Common-Mode-Eingangsfilter (4) unmittelbar am RF-Eingang (8) des Radiotuners (T) angebracht ist.

3. Kraftfahrzeug-Rundfunkempfänger (20) nach Anspruch 1 oder 2, **dadurch gekennzeichnet, dass** das Common-Mode-Eingangsfilter (4) auf einer Platine des Radiotuners (T) angeordnet ist.

4. Kraftfahrzeug-Rundfunkempfänger (20) nach Anspruch 1 oder 2, **dadurch gekennzeichnet, dass** das Common-Mode-Eingangsfilter (4) in eine Verbindungsleitung (3) zwischen der Antennenbuchse (2) und dem RF-Eingang (8) des Radiotuners (T) eingebracht ist.

5. Kraftfahrzeug-Rundfunkempfänger (20) nach einem der vorhergehenden Ansprüche, **dadurch gekennzeichnet, dass** das Common-Mode-Eingangsfilter (4) eine Common-Mode Impedanz von mehr als 100 Ω bei einer Frequenz von 100 MHz aufweist.

6. Kraftfahrzeug-Rundfunkempfänger nach einem der vorhergehenden Ansprüche, **dadurch gekennzeichnet, dass** das Common-Mode-Eingangsfilter als Ringkernspule ausgebildet ist.

## Claims

1. Motor vehicle broadcast radio receiver (20) having a radio tuner (T) and an antenna socket (2), connected to an RF input (8) of the radio tuner (T), for connecting an antenna (1), where an earth (11) for the tuner (T) and an earth (12) for an antenna socket (2) are connected to one another by means of an earth connection (13), **characterized in that** the broadcast radio receiver has a common-mode input filter (4) for rejecting common-mode interference signals at the RF input (8), which common-mode input filter is in the form of a coil having a first winding (9) and a second winding (10), a first end of the first winding (9) being connected to the antenna socket (2) and a second end of the first winding (9) being connected to the radio tuner (6), and a second winding (10) having one end connected to the earth (11) of the tuner (T) and the other end connected to the earth (12) of the antenna socket (2).

2. Motor vehicle broadcast radio receiver (20) according to Claim 1, **characterized in that** the common-mode input filter (4) is fitted directly to the RF input (8) of the radio tuner (T).

3. Motor vehicle broadcast radio receiver (20) according to Claim 1 or 2, **characterized in that** the common-mode input filter (4) is arranged on a board in the radio tuner (T).

4. Motor vehicle broadcast radio receiver (20) according to Claim 1 or 2, **characterized in that** the common-mode input filter (4) is positioned in a connecting line (3) between the antenna socket (2) and the RF input (8) of the radio tuner (T).

5. Motor vehicle broadcast radio receiver (20) according to one of the preceding claims, **characterized in that** the common-mode input filter (4) has a common-mode impedance of more than 100 Ω at a frequency of 100 MHz.

6. Motor vehicle broadcast radio receiver according to one of the preceding claims, **characterized in that** the common-mode input filter is in the form of a toroidal-core coil.

## Revendications

1. Récepteur de radiodiffusion (20) pour véhicule automobile, comportant un bloc d'accord radio (T) et une prise d'antenne (2), reliée à une entrée RF (8) du bloc d'accord radio (T) et destinée à raccorder une antenne (1), où un point de masse (11) du bloc d'accord (T) et un point de masse (12) d'une prise d'antenne (2) sont reliés l'un à l'autre par l'intermédiaire d'un conducteur de masse (13), **caractérisé par le fait que** le récepteur de radiodiffusion comporte, à l'entrée RF (8), un filtre d'entrée (4) en mode commun (ou "common-mode" en anglais) destiné à supprimer des signaux parasites en mode commun, où ledit filtre d'entrée est conçu sous forme de bobine avec un premier enroulement (9) et un deuxième enroulement (10), une première extrémité du premier enroulement (9) étant reliée à la prise d'antenne (2) et une deuxième extrémité du premier enroulement (9) étant reliée au bloc d'accord radio (6) et le deuxième enroulement (10) étant relié, d'une part, à la masse (11) du bloc d'accord (T) et, d'autre part, à la masse (12) de la prise d'antenne (2).

2. Récepteur de radiodiffusion (20) pour véhicule automobile selon la revendication précédente, **caractérisé par le fait que** le filtre d'entrée (4) en mode commun est monté directement à l'entrée RF (8) du bloc d'accord radio (T).

3. Récepteur de radiodiffusion (20) pour véhicule automobile selon la revendication 1 ou 2, **caractérisé par le fait que** le filtre d'entrée (4) en mode commun est monté sur une platine du bloc d'accord radio (T).

4. Récepteur de radiodiffusion (20) pour véhicule automobile selon la revendication 1 ou 2, **caractérisé par le fait que** le filtre d'entrée (4) en mode commun est monté sur un conducteur de raccordement (3) entre la prise d'antenne (2) et l'entrée RF (8) du bloc d'accord radio (T).

5. Récepteur de radiodiffusion (20) pour véhicule automobile selon l'une des revendications précédentes, **caractérisé par le fait que** le filtre d'entrée (4) en mode commun a une impédance en mode commun de plus de 100 Ω à une fréquence de 100 MHz.

6. Récepteur de radiodiffusion pour véhicule automobile selon l'une des revendications précédentes, **caractérisé par le fait que** le filtre d'entrée en mode commun est conçu sous la forme d'une bobine à noyau toroïdal.
